(19) Europäisches Patentamt
European Patent Office
Office européen des brevets

(11) **EP 4 694 298 A1**

(12) **EUROPEAN PATENT APPLICATION**
published in accordance with Art. 153(4) EPC

(43) Date of publication:
**11.02.2026 Bulletin 2026/07**

(21) Application number: **23931432.1**

(22) Date of filing: **06.04.2023**

(51) International Patent Classification (IPC):
**H04W 24/10** (2009.01)      **H04W 24/08** (2009.01)

(52) Cooperative Patent Classification (CPC):
**H04B 7/0456; H04W 24/08; H04W 24/10**

(86) International application number:
**PCT/CN2023/086712**

(87) International publication number:
**WO 2024/207364 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LIU, Zhengxuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **QUANTIZED VALUE DETERMINATION METHOD AND APPARATUS, AND STORAGE MEDIUM**

(57)     Embodiments of the present disclosure provide a quantized value determination method and apparatus, and a storage medium. A communication device determines, according to associated information of quantized values respectively corresponding to at least one of I index numbers, quantized values respectively corresponding to all of the I index numbers, the quantized values being associated with time domain channel properties; and uses X bits to indicate the quantized values, wherein I coded values corresponding to the X bits respectively correspond to the quantized values, I=2X, and X and I are positive integers.

determining, according to association information of quantized values corresponding respectively to at least one index number among I index numbers, quantized values corresponding respectively to the I index numbers, wherein the quantized values are associated with a time domain channel property — 201

indicating the quantized values using X bits, wherein I encoded values corresponding to the X bits correspond respectively to the quantized values, where $I=2^X$, and X and I are positive integers — 202

FIG. 2

EP 4 694 298 A1

## Description

### FIELD

The present disclosure relates to, but is not limited to the field of wireless communication technologies, and in particular relates to a method and an apparatus for determining a quantized value and a storage medium.

### BACKGROUND

For a user equipment (UE) using mobile communication technology, a downlink traffic channel may be precoded by a Type I (I) codebook or a Type II (II) codebook. The two types of codebooks have different throughput at the same speed, but there is a crossing point of throughput at a certain speed. The speed is denoted as a handover speed. At this handover speed, the throughput after downlink precoded by the Type I codebook or the Type II codebook is the same. When the UE speed is greater than the handover speed, the downlink adopting the Type I codebook for precoding has higher throughput, and when the UE speed is smaller than the handover speed, the downlink adopting the Type II codebook has higher throughput.

### SUMMARY

Embodiments of the present disclosure provides a method and an apparatus for determining a quantized value and a storage medium.

According to a first aspect of embodiments of the present disclosure, there is provided a method for determining a quantized value, including:

determining, according to association information of quantized values corresponding respectively to at least one index number among I index numbers, quantized values corresponding respectively to the I index numbers, in which the quantized values are associated with a time domain channel property; and

indicating the quantized values using X bits, in which I encoded values corresponding to the X bits correspond respectively to the quantized values, where $I=2^X$, and X and I are positive integers.

In an embodiment, a quantized difference between two quantized values corresponding respectively to any two adjacent index numbers is the same; and

determining, according to the association information of the quantized values corresponding respectively to the at least one index number among the I index numbers, the quantized values corresponding respectively to the I index numbers includes:

determining the quantized difference according to the quantized values corresponding respectively to two index numbers among the I index numbers; and

determining, at least according to the difference, the quantized values corresponding respectively to the I index numbers.

In an embodiment, determining the difference according to the quantized values corresponding respectively to two index numbers among the I index numbers includes:

determining the quantized difference according to a quantized value corresponding to a maximum value of the I index numbers and a quantized value corresponding to a minimum value of the I index numbers.

In an embodiment, for each of the quantized values, the association information of the quantized value includes an intermediate independent variable used to calculate the quantized value, in which the quantized value is determined based on the intermediate independent variable and a first calculation rule.

In an embodiment, determining, according to the association information of the quantized values corresponding respectively to the at least one index number among the I index numbers, the quantized values corresponding respectively to the I index numbers includes:

determining, according to the quantized values corresponding respectively to the at least one index number and the first calculation rule, the intermediate independent variables corresponding respectively to the at least one quantized value;

determining, according to the intermediate independent variables corresponding respectively to the at least one quantized value and a second calculation rule, the intermediate independent variables corresponding respectively to the quantized values; and

determining, according to the intermediate independent variables corresponding respectively to the quantized values and the first calculation rule, the quantized values.

In an embodiment, determining, according to the quantized values corresponding respectively to the at least one index number and the first calculation rule, the intermediate independent variables corresponding respectively to the at least one quantized value includes:

determining, according to a first quantized value corresponding to a maximum value of the I index numbers and a second quantized value corresponding to a minimum value of the I index number, a first intermediate independent variable corresponding to the first quantized value and a second intermediate independent variable corresponding to the second quantized value through the first calculation rule; and
determining, according to the intermediate independent variables corresponding respectively to the at least one quantized value and the second calculation rule, the intermediate independent variables corresponding respectively to the quantized values includes:
determining, according to the first intermediate independent variable and the second intermediate independent variable and the second calculation rule, the intermediate independent variables corresponding respectively to the quantized values.

In an embodiment, determining, according to the quantized values corresponding respectively to the at least one index number and the first calculation rule, the intermediate independent variables corresponding respectively to the at least one quantized value includes:

determining, according to a third quantized value corresponding to any of the I index numbers and the first calculation rule, a third intermediate independent variable corresponding to the third quantized value; and
determining, according to the intermediate independent variables corresponding respectively to the at least one quantized value and the second calculation rule, the intermediate independent variables corresponding respectively to the quantized values includes:
determining the intermediate independent variable corresponding respectively to the quantized values according to the third intermediate independent variable and a predetermined difference between the intermediate independent variables corresponding respectively to the quantized values.

In an embodiment, determining, according to the association information of the quantized values corresponding respectively to the at least one index number among the I index numbers, the quantized values corresponding respectively to the I index numbers includes:
determining the quantized values corresponding respectively to the index numbers according to the intermediate independent variables of the quantized values corresponding respectively to the index numbers and the first calculation rule, in which an independent variable difference between two intermediate independent variables of two quantized values corresponding respectively to any two adjacent index numbers is the same, or an variable ratio of two intermediate independent variables of two quantized values corresponding respectively to any two adjacent index numbers is the same.
In an embodiment, the I index numbers include I consecutive natural numbers.
According to a second aspect of embodiments of the present disclosure, there is provided an apparatus for determining a quantized value, including:
a processing module configured to determine, according to association information of quantized values corresponding respectively to at least one index number among I index numbers, quantized values corresponding respectively to the I index numbers, in which the quantized values are associated with a time domain channel property; and indicate the quantized values using X bits, in which I encoded values corresponding to the X bits correspond respectively to the quantized values, where $I=2^X$, and X and I are positive integers.
In an embodiment, a quantized difference between two quantized values corresponding respectively to any two adjacent index numbers is the same; and
the processing module is further configured to determine the quantized difference according to the quantized values corresponding respectively to two index numbers among the I index numbers; and determine, at least according to the difference, the quantized values corresponding respectively to the I index numbers.
In an embodiment, the processing module is further configured to determine the quantized difference according to a quantized value corresponding to a maximum value of the I index numbers and a quantized value corresponding to a minimum value of the I index numbers.
In an embodiment, for each of the quantized values, the association information of the quantized value includes an intermediate independent variable used to calculate the quantized value, in which the quantized value is determined based on the intermediate independent variable and a first calculation rule.

In an embodiment, the processing module is further configured to determine, according to the quantized values corresponding respectively to the at least one index number and the first calculation rule, the intermediate independent variables corresponding respectively to the at least one quantized value; determine, according to the intermediate independent variables corresponding respectively to the at least one quantized value and a second calculation rule, the intermediate independent variables corresponding respectively to the quantized values; and determine, according to the intermediate independent variables corresponding respectively to the quantized values and the first calculation rule, the quantized values.

In an embodiment, the processing module is further configured to determine, according to a first quantized value corresponding to a maximum value of the I index numbers and a second quantized value corresponding to a minimum value of the I index number, a first intermediate independent variable corresponding to the first quantized value and a second intermediate independent variable corresponding to the second quantized value through the first calculation rule; and determine, according to the first intermediate independent variable and the second intermediate independent variable and the second calculation rule, the intermediate independent variables corresponding respectively to the quantized values.

In an embodiment, the processing module is further configured to: determine, according to a third quantized value corresponding to any of the I index numbers and the first calculation rule, a third intermediate independent variable corresponding to the third quantized value; and determine the intermediate independent variable corresponding respectively to the quantized values according to the third intermediate independent variable and a predetermined difference between the intermediate independent variables corresponding respectively to the quantized values.

In an embodiment, the processing module is further configured to determine the quantized values corresponding respectively to the index numbers according to the intermediate independent variables of the quantized values corresponding respectively to the index numbers and the first calculation rule, in which an independent variable difference between two intermediate independent variables of two quantized values corresponding respectively to any two adjacent index numbers is the same, or an variable ratio of two intermediate independent variables of two quantized values corresponding respectively to any two adjacent index numbers is the same.

In an embodiment, the I index numbers include I consecutive natural numbers.

According to a third aspect of embodiments of the present disclosure, there is provided a communication device, including: a processor; a transceiver; a memory; and an executable program stored in the memory and capable of being run by the processor, in which the processor executes the method for determining the quantized value provided in the first aspect when running the executable program.

According to a fourth aspect of embodiments of the present disclosure, there is provided a computer storage medium having stored therein an executable program that, when executed by a processor, cause the method for determining the quantized value provided in the first aspect to be implemented.

With the embodiments of the present disclosure provide the method and the apparatus for determining the quantized value and the storage medium, the communication device determines, according to the association information of the quantized values corresponding respectively to the at least one index number among the I index numbers, the quantized values corresponding respectively to the I index numbers, in which the quantized values are associated with the time domain channel property; and indicates the quantized values using the X bits, in which the I encoded values corresponding to the X bits correspond respectively to the quantized values, where $I=2^X$, and X and I are positive integers. In this way, according to the association information of the quantized values corresponding respectively to at least one or more index numbers among the I index numbers, the quantized values corresponding respectively to the I index numbers are determined, the quantization of autocorrelation values of channel measurement results is implemented, and the efficiency for reporting the UE is improved.

It is to be understood that both the foregoing general description and the following detailed description are illustrative and explanatory only and are not restrictive of the present disclosure.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

FIG. 1 is a schematic diagram illustrating a wireless communication system according to an illustrative embodiment.
FIG. 2 is a schematic flowchart illustrating a method for determining a quantized value according to an illustrative embodiment.
FIG. 3 is a schematic flowchart illustrating a method for determining a quantized value according to an illustrative embodiment.
FIG. 4 is a schematic flowchart illustrating a method for determining a quantized value according to an illustrative embodiment.

FIG. 5 is a block diagram illustrating an apparatus for determining a quantized value according to an illustrative embodiment.

FIG. 6 is a block diagram illustrating a user equipment (UE) according to an illustrative embodiment.

FIG. 7 is a block diagram illustrating a communication device according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the present disclosure.

Terms used herein in embodiments of the present disclosure are only for the purpose of describing specific embodiments, but should not be construed to limit embodiments of the present disclosure. As used in the embodiments of the present disclosure, "a/an", "said" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

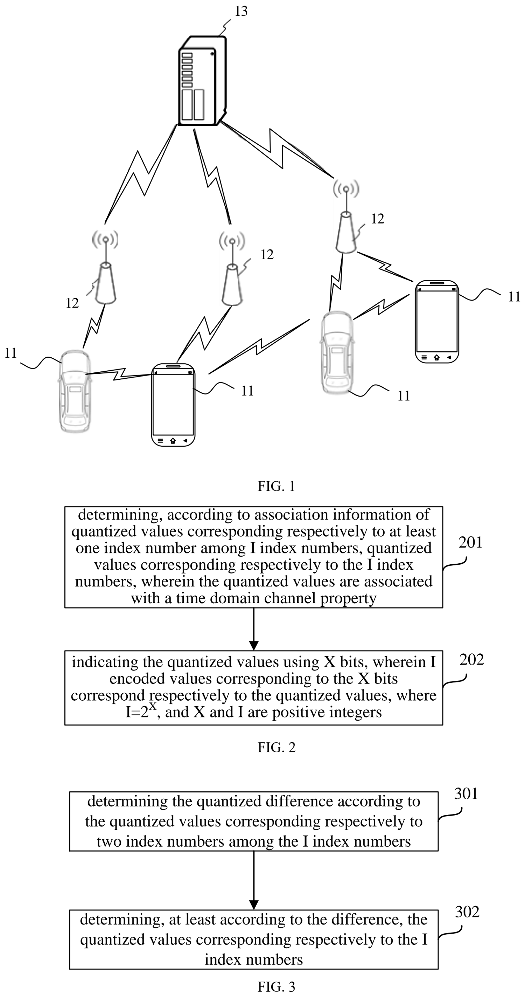

Reference is made to FIG. 1, which is a schematic diagram showing a wireless communication system provided in an embodiment of the present disclosure. As shown in FIG. 1, the wireless communication system is a communication system based on a cellular mobile communication technology, and may include several user equipments (UEs) 11 and several network devices 12.

The wireless communication system may be a 4th generation mobile communication (4G) system, also referred to as a long term evolution (LTE) system. Alternatively, the wireless communication system may also be a 5G system, also referred to as a new radio (NR) system or a 5G NR system. Alternatively, the wireless communication system may also be a next generation system of the 5G system. The access network in the 5G system may be referred to as a new generation-radio access network (NG-RAN), or a MTC system.

The UE 11 may be a device that provides voice and/or data connectivity to a user. The UE 11 may communicate with one or more core networks via a radio access network (RAN). The UE 11 may be an Internet of Things terminal, such as a sensor device, a mobile phone (or referred to as a "cellular" phone) and a computer with an Internet of Things terminal. For example, the UE 11 may be a fixed, portable, pocket-sized, handheld, computer built-in or vehicle-mounted apparatus. For example, the UE 11 may be a station (STA), a subscriber unit, a subscriber station, a mobile station, a mobile, a remote station, an access point, a remote terminal, an access terminal, a user terminal, a user agent, a user device, or a UE. Alternatively, the UE 11 may also be a device of an unmanned aerial vehicle. Alternatively, the UE 11 may also be a vehicle-mounted device, for example, a driving computer with a wireless communication function, or a wireless communication device externally connected with a driving computer. Alternatively, the UE 11 may be a roadside device, such as a street lamp, a signal lamp or other roadside devices with a wireless communication function.

The network device 12 may include an access network device. Optionally, the network device 12 may also include a core network device. The access network device may be an evolved base station (eNB) used in the 4G system. Alternatively, the access network device may also be a centralized distributed architecture base station (gNB) in the 5G system. When the access network device adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the access network device is not limited in the embodiments of the present disclosure.

A wireless connection may be established between the network device 12 and the UE 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In order to optimize throughput of a downlink at different speeds, the UE may measure a channel according to a tracking reference signal (TRS), report a channel autocorrelation amplitude value to represent a time domain channel property (TDCP) of the UE, and a network side determines a type of precoding used in the downlink according to the TDCP reported by the UE. The specific steps are as follows.

1. UE measures the channel autocorrelation amplitude value.
2. The UE quantizes the measured channel autocorrelation value and reports it to the network side as the TDCP.
3. After receiving the TDCP, the network side compares it with a threshold. If the TDCP is greater than the threshold, the Type II codebook is used, otherwise the Type I codebook is used.

On the other hand, the UE may report multiple channel autocorrelation amplitude values to represent the TDCP of the UE, and the network side may be configured to configure a sounding reference signal (SRS) transmission period value based on the channel reciprocity of an SRS according to the TDCP reported by the UE.

For the UE in the mobile scenario, the network side needs to obtain the current TDCP of the UE, and then determine the codebook type to be used in the downlink and configure the SRS transmission period value according to the TDCP. The TDCP reported by the UE is a result of quantization of the channel autocorrelation value. How to quantize the channel autocorrelation value, reduce an error caused by quantization and reduce a performance loss is an urgent problem to be solved.

As shown in FIG. 2, embodiments of the present disclosure provide a method for determining a quantized value, including the following steps.

In step 201, quantized values corresponding respectively to the I index numbers is determined according to association information of quantized values corresponding respectively to at least one index number among I index numbers, in which the quantized values are associated with a time domain channel property; and

In step 202, the quantized values are indicated using X bits, in which I encoded values corresponding to the X bits correspond respectively to the quantized values, where $I=2^X$, and X and I are positive integers.

In an embodiment, the steps in the method for determining the quantized value provided by this embodiment may be performed by the communication device.

In an embodiment, the communication device includes, but is not limited to, a UE such as a mobile phone.

The quantized value may be a result of quantization of a channel autocorrelation value reported by the UE. That is, the quantized value is a TDCP reported by the UE.

The UE may measure a channel according to a TRS, quantize the measurement result, obtain the quantized value (i.e., the TDCP), and then report the quantized value to a network device (such as a core network device and/or an access network device and the like), and the network device determines the type of precoding used in a downlink according to the TDCP reported by the UE.

The UE may indicate the quantized value using X bits, and the X bits may indicate $2^X$ different encoded values, each of the encoded values corresponding to one quantized value. Therefore, the X bits may indicate $2^X$ different quantized values.

In an embodiment, the I encoded values corresponding to the X bits have a corresponding relationship with an index number, and the encoded values corresponding to the quantized value may be determined according to the index number of the quantized value.

In an embodiment, the encoded value corresponding to the quantized value may be used as the index number of the quantized value.

Unless otherwise specified, in this example, the encoded values corresponding to the X bits is used as the index number (or referred to as an index) of the quantized value.

For example, if the encoded value corresponding to the quantized value is 0, the index number corresponding to the quantized value is 0.

In an embodiment, the I index numbers include I consecutive natural numbers.

An encoded value of the X bits is used as an index number corresponding to the quantized value.

For example, the TDCP reported by the UE is the result of quantization of the channel autocorrelation value, and is quantized by using the X bits. The X bits may represent $2^X$ time domain correlation values, that is, the quantized values. An index number $A_i$ generated by the X bits is $[0, 1, ....., 2^X-1]$, and the subscript i represents $i^{th}$ index number, where $i \in [0, 1, ....., 2^X-1]$.

In an embodiment, the association information of the quantized value may be used to determine the corresponding quantized value.

In an embodiment, the association information of the quantized value may include, but is not limited to, one of the following: a quantized value; an intermediate independent variable used to calculate the quantified value and the like.

The quantized value is determined based on the intermediate independent variable and a predetermined calculation rule.

In an embodiment, the association information of the quantized values arranged in an order of index numbers is autocorrelated. That is, the association information of the quantized values corresponding to one or more index numbers has a correlation with the association information of other quantized values. The correlation may be the correlation information based on quantized values corresponding to one or more index numbers, and correlation information of other quantized values may be calculated according to the correlation.

For example, if the quantized values arranged in the order of index numbers are equal difference sequences, the quantized values corresponding to index numbers may be determined according to the quantized values corresponding to one or more index numbers.

For another example, if the intermediate independent variables of the quantized values arranged in the order of index numbers are equal difference sequences, the intermediate independent variables of the quantized values corresponding to index numbers may be determined according to the intermediate independent variables corresponding to one or more index numbers, and the quantized values corresponding to index numbers may be determined according to the intermediate independent variables.

After determining the quantized values corresponding to index numbers, the UE may determine the encoded value corresponding to a measured value according to the measured value (i.e., the quantized value obtained by measurement) and a corresponding relationship between the quantized value and the encoded value, and then report the encoded value by using the X bits.

The network device determines the measured value measured by the UE according to the encoded value received and a corresponding relationship between the quantized value and the encoded value.

In this way, the quantized values corresponding respectively to the I index numbers is determined according to the association information of the quantized values corresponding respectively to at least one or more index numbers among the I index numbers, the quantization of a channel measurement result autocorrelation value is implemented, thereby improving the efficiency for reporting the UE.

In an embodiment, a quantized difference between two quantized values corresponding respectively to any two adjacent index numbers is the same.

As shown in FIG. 3, step 201 may include the following steps.

In step 301, the quantized difference is determined according to the quantized values corresponding respectively to two index numbers among the I index numbers.

In step 302, the quantized values corresponding respectively to the I index numbers are determined at least according to the difference.

The quantized values may be an arithmetic sequence, and the quantized difference may be determined according to the quantized values corresponding respectively to two index numbers, thereby determining the quantized values corresponding to the index numbers.

For example, two quantized values $q_n$ and $q_k$ may be given. If the quantized value $q_n$ is represented by an $n^{th}$ index number $A_n$, and the quantized value $q_k$ is represented by a $k^{th}$ index number $A_k$, a quantized value $q_i$ represented by an $i^{th}$ index $A_i$ may be represented by expression (1):

$$q_i = q_k + (i - k) * \frac{q_k - q_n}{k - n} \quad (1)$$

For example, two quantized values are $q_n = 0.99$ and $q_k = 0.94$. If the quantized value $q_n$ is represented by an index $A_0$, and the quantized value $q_k$ is represented by an index number $A_4$, the quantized value $q_i$ represented by the $i^{th}$ index $A_i$ may be represented as $q_i = 0.94 + (i - 4) * \frac{0.94 - 0.99}{4 - 0}$. The quantized values corresponding respectively to the obtained index numbers are shown in Table (1).

Table (1)

| $A_i$ | 0 | 1 | 2 | 3 | 4 | 5 | 6 | 7 |
|---|---|---|---|---|---|---|---|---|
| $q_i$ | 0.9900 | 0.9775 | 0.9650 | 0.9525 | 0.9400 | 0.9275 | 0.9150 | 0.9025 |

In an embodiment, determining the difference according to the quantized values corresponding respectively to two index numbers among the I index numbers includes:
determining the quantized difference according to a quantized value corresponding to a maximum value of the I index numbers and a quantized value corresponding to a minimum value of the I index numbers.

In an embodiment, the quantized values may be determined according to a predetermined quantization interval.

The predetermined quantization interval is a quantized value corresponding to a maximum value of a predetermined index number and a quantized value corresponding to a minimum value of the index number. Since the quantized difference between the quantized values is the same, the quantized difference may be determined according to a total number of quantized values, the quantized value corresponding to the maximum value of the index number, and the quantized value corresponding to the minimum value of the index number.

Further, the quantized values corresponding to the index numbers are determined according to at least one of the quantized value corresponding to the maximum value of the index number or the quantized value corresponding to the minimum value of the index number, and the quantized difference.

For example, if the predetermined quantization interval is $[q_0, q_k]$, $q_0$ is represented by an index $A_0$ and $q_k$ is represented by an index $A_{2^X-1}$, the quantized value $q_i$ represented by the $i^{th}$ index $A_i$ may be represented by expression (2):

$$q_i = q_0 + i * \frac{q_k - q_0}{2^X - 1} \ (2)$$

For example, three bits are used for quantization, eight autocorrelation values may be represented, and the index numbers $A_i$ [0, 1, 2, .., 7].

If the quantized interval is [0.8, 1], the quantized value $q_i$ represented by the $i^{th}$ index $A_i$ may be represented as $q_i = 0.8 + i * \frac{1 - 0.8}{8 - 1}$. The quantized values corresponding to the obtained index numbers are shown in Table (2).

Table (2)

| $A_i$ | 0 | 1 | 2 | 3 | 4 | 5 | 6 | 7 |
|---|---|---|---|---|---|---|---|---|
| $q_i$ | 0.8000 | 0.8286 | 0.8571 | 0.8857 | 0.9143 | 0.9429 | 0.9714 | 1.0000 |

In an embodiment, for each of the quantized values, the association information of the quantized value includes an intermediate independent variable used to calculate the quantized value, in which the quantized value is determined based on the intermediate independent variable and a first calculation rule.

In an embodiment, the intermediate independent variables of the quantized values arranged in the order of index numbers are autocorrelated. That is, the intermediate independent variables of the quantized values corresponding to one or more index numbers have a correlation with the intermediate independent variables of other quantized values. The correlation may be an intermediate independent variable based on quantized values corresponding to one or more index numbers, and the intermediate independent variables of other quantized values may be calculated according to the correlation.

For example, if the intermediate independent variables of the quantized values arranged in the order of index numbers are the arithmetic sequence, the intermediate independent variables of the quantized values corresponding to the index numbers may be determined according to the intermediate independent variables corresponding to one or more index numbers, and the intermediate independent variables corresponding to the index numbers may be determined according to the intermediate independent variables.

In an embodiment, the quantized value may have a corresponding relationship with the corresponding intermediate independent variable.

The correspondence between the quantized value and the corresponding intermediate independent variable may include at least one of:

calculating the corresponding intermediate independent variable according to the quantized value; or
calculating the corresponding quantized value according to the intermediate independent variable.

In an embodiment, the correspondence between the quantized value and the corresponding intermediate independent variable may be the first calculation rule.

In an embodiment, the quantized value corresponding the intermediate independent variable is determined based on the intermediate independent variable and the first calculation rule; and the intermediate independent variable corresponding to the quantized value may be determined by reverse calculation based on the quantized value and the first calculation rule.

In an embodiment, the first calculation rule may be represented by expression $f(x)$, and the quantized value may be represented by $q_i = f(x_i)$, where $q_i$ represents the quantized value and $x_i$ represents the intermediate independent variable corresponding $q_i$.

In an embodiment, $f(x) = J_0(x)$, where $J_0(x)$ is a zero-order Bessel function.

In an embodiment, $f(x) = 1 - x^2$.

In this way, based on the intermediate independent variables of the quantized values corresponding to one or more index numbers, the intermediate independent variables of other quantized values may be calculated from the correlation between the intermediate independent variables, and the quantized values may be determined according to the intermediate independent variables corresponding to the quantized values.

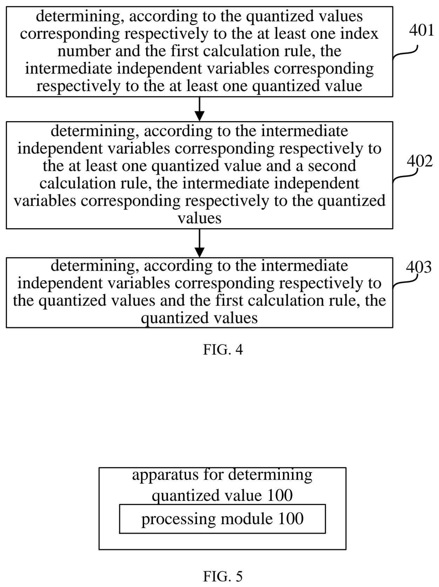

In an embodiment, as shown in FIG. 4, step 201 may include the following steps.

In step 401, the intermediate independent variables corresponding respectively to the at least one quantized value is determined according to the quantized values corresponding respectively to the at least one index number and the first calculation rule.

In step 402, the intermediate independent variables corresponding respectively to the quantized values is determined according to the intermediate independent variables corresponding respectively to the at least one quantized value and a second calculation rule.

In step 403, the quantized values are determined according to the intermediate independent variables corresponding respectively to the quantized values and the first calculation rule.

In an embodiment, the intermediate independent variables of the quantized values arranged in the order of index numbers are autocorrelated. That is, the intermediate independent variables of the quantized values corresponding to one or more index numbers have a correlation with the intermediate independent variables of other quantized values. The correlation between the intermediate independent variables may be the second calculation rule.

For example, if the intermediate independent variables of the quantized values arranged in an order of the index numbers are an arithmetic sequence, the second calculation rule may be a calculation rule for determining the intermediate independent variables of the quantized values corresponding to the index numbers according to the intermediate independent variables corresponding to one or more index numbers and an arithmetic sequence calculation method.

For a given quantized value corresponding to one or more index numbers, the intermediate independent variables of the quantized values corresponding to one or more index numbers may be inferred by the first calculation rule. Then, according to the intermediate independent variables of the quantized values corresponding to the one or more index numbers, the intermediate independent variables of other quantized values may be calculated according to the correlation of the intermediate independent variables and the second calculation rule. Finally, the corresponding quantized value is calculated by the intermediate independent variable based on the first calculation rule.

In an embodiment, determining, according to the quantized values corresponding respectively to the at least one index number and the first calculation rule, the intermediate independent variables corresponding respectively to the at least one quantized value includes:

determining, according to a first quantized value corresponding to a maximum value of the I index numbers and a second quantized value corresponding to a minimum value of the I index number, a first intermediate independent variable corresponding to the first quantized value and a second intermediate independent variable corresponding to the second quantized value through the first calculation rule; and

determining, according to the intermediate independent variables corresponding respectively to the at least one quantized value and the second calculation rule, the intermediate independent variables corresponding respectively to the quantized values includes:

determining, according to the first intermediate independent variable and the second intermediate independent variable and the second calculation rule, the intermediate independent variables corresponding respectively to the quantized values.

In an embodiment, the second calculation rule may be a calculation rule for calculating the intermediate independent variables according to the first intermediate independent variable and the second intermediate independent variable.

In an embodiment, the second calculation rule may be represented by expression (3):

$$x_i = x_0 + i * \frac{x_k - x_0}{2^X - 1} \ (3)$$

where $x_i$ represents an intermediate independent variable of a quantized value corresponding to an index number $A_i$ to be determined, $x_0$ represents the first intermediate independent variable, and $x_k$ represents the second intermediate independent variable.

In an embodiment, the second calculation rule may be represented by expression (4):

$$x_i = x_0 * \left(\frac{x_k}{x_0}\right)^{\frac{i}{2^X-1}} \quad (4)$$

where $x_i$ represents the intermediate independent variable of the quantized value corresponding to the index number $A_i$ to be determined, $x_0$ represents the first intermediate independent variable, and $x_k$ represents the second intermediate independent variable.

If the predetermined quantization interval is $[q_0, q_k]$, and $q_0$ is represented by an index $A_0$ and $q_k$ is represented by an index $A_{2^X-1}$, the quantized values $q_0$ and $q_k$ according to the first calculation rule may be represented by expressions (5) and (6) respectively:

$$f(x_0) = q_0 \quad (5)$$

$$f(x_k) = q_k \quad (6)$$

where $f(x) = J_0(x)$, or $f(x) = 1 - x^2$ according to the first calculation rule, and $J_0(x)$ is a zero-order Bessel function. From expressions (5) and (6), the intermediate independent variable $x_0$ corresponding to $q_0$ and the intermediate independent variable $x_k$ corresponding to $q_k$ may be calculated, and then the quantized value $q_i$ represented by the $i^{th}$ index $A_i$ may be represented as $q_i = f\left(x_0 + i * \frac{x_k - x_0}{2^X-1}\right)$ or $q_i = f\left(x_0 * \left(\frac{x_k}{x_0}\right)^{\frac{i}{2^X-1}}\right)$.

For example, three bits are used for quantization, eight autocorrelation values may be represented, and the index numbers $A_i$ is [0, 1, 2, .., 7].

If the quantized interval is [0.8, 1] and $f(x) = 1 - x^2$, $1 - x_0^2 = 0.8$, $1 - x_k^2 = 1$, and $x_0 = 0.4472$, $x_k = 0$ is solved to obtain, and then the quantized value $q_i$ represented by the $i^{th}$ index $A_i$ may be represented as $q_i = 1 - \left(0.4472 + i * \frac{0-0.4472}{8-1}\right)^2$. The quantized values corresponding to the obtained index numbers are shown in Table (3).

Table (3)

| $A_i$ | 0 | 1 | 2 | 3 | 4 | 5 | 6 | 7 |
|---|---|---|---|---|---|---|---|---|
| $q_i$ | 0.8000 | 0.8531 | 0.8980 | 0.9347 | 0.9633 | 0.9837 | 0.9959 | 1.0000 |

In an embodiment, determining, according to the quantized values corresponding respectively to the at least one index number and the first calculation rule, the intermediate independent variables corresponding respectively to the at least one quantized value includes:

determining, according to a third quantized value corresponding to any of the I index numbers and the first calculation rule, a third intermediate independent variable corresponding to the third quantized value; and
determining, according to the intermediate independent variables corresponding respectively to the at least one quantized value and the second calculation rule, the intermediate independent variables corresponding respectively to the quantized values includes:
determining the intermediate independent variable corresponding respectively to the quantized values according to the third intermediate independent variable and a predetermined difference between the intermediate independent variables corresponding respectively to the quantized values.

In an embodiment, for example, the intermediate independent variables of the quantized values arranged in the order of index numbers are the arithmetic sequence, and a difference between the intermediate independent variables corresponding to adjacent quantized values (i.e. quantized values corresponding to adjacent index numbers) is a predetermined difference. The second calculation rule may be a calculation rule for determining the intermediate independent variables of the quantized values corresponding to the index numbers according to the intermediate independent variables corresponding to one or more index numbers and an arithmetic sequence calculation method.

For example, a quantized value $q_k$ may be given and is represented by an index $A_k$, and $q_k$ may be represented by expression (7) according to the first calculation rule:

$$f(x_k) = q_k \quad (7)$$

where $f(x) = J_0(x)$ , or $f(x) = 1 - x^2$. $J_0(x)$ is a zero-order Bessel function. The intermediate independent variable $x_k$ corresponding to the quantized value $q_k$ is inferred from expression (7). Therefore, the quantized value $q_i$ represented by the $i^{th}$ index $A_i$ may be represented as $q_i = f(x_k + (i - k) * \Delta x)$, where $\Delta x$ is a predetermined difference, or may also be referred to as a quantization step size.

For example, a reference value $q_k = 0.94$ is given, the reference value $q_k$ is represented by an index $A_4$, $f(x) = 1 - x^2$, and the quantization step size $\Delta x = 0.04$, then $1 - x_k^2 = 0.94$ , and $x_k = 0.2449$ is solved to obtain, and then the quantized value $q_i$ represented by the $i^{th}$ index $A_i$ may be represented as $q_i = f(0.2449 + (i - 4) * 0.04) = 1 - (0.2449 + (i - 4) = 0.04)^2$. The quantized values corresponding to the obtained index numbers are shown in Table (4).

Table (4)

| $A_i$ | 0 | 1 | 2 | 3 | 4 | 5 | 6 | 7 |
|---|---|---|---|---|---|---|---|---|
| $q_i$ | 0.9928 | 0.9844 | 0.9728 | 0.9580 | 0.9400 | 0.9188 | 0.8944 | 0.8668 |

In an embodiment, determining, according to the association information of the quantized values corresponding respectively to the at least one index number among the I index numbers, the quantized values corresponding respectively to the I index numbers includes:
determining the quantized values corresponding respectively to the index numbers according to the intermediate independent variables of the quantized values corresponding respectively to the index numbers and the first calculation rule, in which an independent variable difference between two intermediate independent variables of two quantized values corresponding respectively to any two adjacent index numbers is the same, or an variable ratio of two intermediate independent variables of two quantized values corresponding respectively to any two adjacent index numbers is the same.

The intermediate independent variables of the quantized values corresponding respectively to the index numbers may be preset, and then the quantized values corresponding respectively to the index numbers may be determined according to the first calculation rule.

For example, a set of values $[x_0, x_1, ... , x_i, ..., x_{2X-1}]$ of an intermediate independent variable $x$ may be given, and $x$ will be substituted into $f(x)$ according to the first calculation rule, and then the quantized value $q_i$ represented by the $i^{th}$ index $A_i$ may be represented as $q_i = f(x_i)$.

In an embodiment, a value of x satisfies $x_{i+1} - x_i = \Delta x$, where $\Delta x$ is the quantization step size and the independent variable difference.

In an embodiment, $\frac{x_{i+1}}{x_i} = \Delta x$ , where $\Delta x$ is the quantization step size and the variable ratio.

The following provides multiple specific examples in combination with any of the above embodiments.

A TDCP reported by a UE is a result of quantization of a channel autocorrelation value, and is quantized by using the X bits, the X bits may represent $2^X$ time domain correlation values, the generated index $A_i$ is $[0, 1, ....., 2^X-1]$, and the subscript i represents the $i^{th}$ index, where $i \in [0, 1, ....., 2^X-1]$.

A quantization method for the TDCP includes the follows.

Opt1: Uniform quantization
Alt1: a quantization interval $[q_0, q_k]$ is given, $q_0$ is represented by the index $A_0$ and $q_k$ is represented by the index $A_{2X-1}$, and then the quantized value $q_i$ represented by the $i^{th}$ index $A_i$ may be represented as $q_i = q_0 + i * \frac{q_k - q_0}{2^X - 1}$ ; and

Alt2: the quantization interval is not given, two reference values $q_n$ and $q_k$ may be given, and the reference value $q_n$ is represented by an index $A_n$, and the reference value $q_k$ is represented by an index $A_k$, and then the quantized value $q_i$ represented by the $i^{th}$ index $A_i$ may be represented as $q_i = q_k + (i - k) * \frac{q_k - q_n}{k - n}$ .

Opt2: Non-uniform quantization
Alt1: a quantization interval $[q_0, q_k]$ is given, and $q_0$ is represented by an index $A_0$ and $q_k$ is represented by an index $A_{2X-1}$, the quantized values $q_0$ and $q_k$ according to the first calculation rule may be represented by expressions (5) and (6) respectively, where $f(x) = J_0(x)$, or $f(x) = 1 - x^2$, and $J_0(x)$ is a zero-order Bessel function. From expressions (1) and

(2), $x_0$ and $x_k$ may be calculated, and then the quantized value $q_i$ represented by the $i^{th}$ index $A_i$ may be represented as

$$q_i = f\left(x_0 + i * \frac{x_k - x_0}{2^X - 1}\right) \quad \text{or} \quad q_i = f\left(x_0 * \left(\frac{x_k}{x_0}\right)^{\frac{i}{2^X - 1}}\right).$$

Alt2: the quantization interval is not given, and a reference value $q_k$ is given, and is represented by an index $A_k$. $q_k$ may be represented by expression (7) according to the first calculation rule, where $f(x) = J_0(x)$, or $f(x) = 1 - x^2$. $J_0(x)$ is a zero-order Bessel function. From expression (3), $x_k$ may be inferred, and then the quantized value $q_i$ represented by the $i^{th}$ index $A_i$ may be represented as $q_i = f(x_k + (i - k) * \Delta x)$, where $\Delta x$ is a quantization step size.

Alt3: a set of values $[x_0, x_1, \ldots, x_i, \ldots, x_{2X-1}]$ of x is given and is substituted into the function f(x), and the value of x satisfies $x_{i+1} - x_i = \Delta x$ or $\frac{x_{i+1}}{x_i} = \Delta x$ , where $\Delta x$ is a quantization step size. Depending on the specific situation, the

quantized value $q_i$ represented by the $i^{th}$ index $A_i$ may be represented as $q_i = f(x_i)$.

Example 1: Uniform quantization of the TDCP

Three bits are used for quantization, eight autocorrelation values may be represented, and the index numbers $A_i$ is [0, 1, 2, .., 7].

If the quantized interval is [0.8, 1], the quantized value $q_i$ represented by the $i^{th}$ index $A_i$ may be represented as

$q_i = 0.8 + i * \frac{1 - 0.8}{8 - 1}$ . The quantized values corresponding to the obtained index numbers are shown in Table (1).

The quantization interval is not given, two reference values $q_n = 0.99$ and $q_k = 0.94$ may be given. The reference value $q_n$ is represented by an index $A_n$, and the reference value $q_k$ is represented by an index $A_k$, and then the quantized

value $q_i$ represented by the $i^{th}$ index $A_i$ may be represented as $q_i = 0.94 + (i - 4) * \frac{0.94 - 0.99}{4 - 0}$ . The quantized values corresponding to the obtained index numbers are shown in Table (2).

Example 2: Non-uniform quantization of the TDCP

Three bits are used for quantization, eight autocorrelation values may be represented, and the index numbers $A_i$ is [0, 1, 2, .., 7].

If the quantized interval is [0.8, 1] and $f(x) = 1 - x^2$, $1 - x_0^2 = 0.8$, $1 - x_k^2 = 1$, and $x_0 = 0.4472$, $x_k = 0$ is solved to obtain, and then the quantized value $q_i$ represented by the $i^{th}$ index $A_i$ may be represented as

$q_i = 1 - \left(0.4472 + i * \frac{0 - 0.4472}{8 - 1}\right)^2$ . The quantized values corresponding to the obtained index numbers are shown in Table (3).

The quantization interval is not given, and a reference value $q_k = 0.94$ is given, the reference value $q_k$ is

represented by an index $A_4$, $f(x) = 1 - x^2$, and the quantization step size $\Delta x = 0.04$, then $1 - x_k^2 = 0.94$ , and $x_k = 0.2449$ is

solved to obtain, and then the quantized value $q_i$ represented by the $i^{th}$ index $A_i$ may be represented as $q_i = f(0.2449 + (i - 4) * 0.04) = 1 - (0.2449 + (i - 4) * 0.04)^2$. The quantized values corresponding to the obtained index numbers are shown in Table (4).

As shown in FIG. 5, embodiments of the present disclosure provide an apparatus 100 for determining a quantized value, including:

a processing module configured to determine, according to association information of quantized values corresponding respectively to at least one index number among I index numbers, quantized values corresponding respectively to the I index numbers, in which the quantized values are associated with a time domain channel property; and indicate the quantized values using X bits, in which I encoded values corresponding to the X bits correspond respectively to the quantized values, where $I = 2^X$, and X and I are positive integers.

In an embodiment, a quantized difference between two quantized values corresponding respectively to any two adjacent index numbers is the same; and

the processing module is further configured to determine the quantized difference according to the quantized values corresponding respectively to two index numbers among the I index numbers; and determine, at least according to the difference, the quantized values corresponding respectively to the I index numbers.

In an embodiment, the processing module is further configured to determine the quantized difference according to a quantized value corresponding to a maximum value of the I index numbers and a quantized value corresponding to a minimum value of the I index numbers.

In an embodiment, for each of the quantized values, the association information of the quantized value includes an intermediate independent variable used to calculate the quantized value, in which the quantized value is determined based on the intermediate independent variable and a first calculation rule.

In an embodiment, the processing module is further configured to determine, according to the quantized values corresponding respectively to the at least one index number and the first calculation rule, the intermediate independent variables corresponding respectively to the at least one quantized value; determine, according to the intermediate independent variables corresponding respectively to the at least one quantized value and a second calculation rule, the intermediate independent variables corresponding respectively to the quantized values; and determine, according to the intermediate independent variables corresponding respectively to the quantized values and the first calculation rule, the quantized values.

In an embodiment, the processing module is further configured to determine, according to a first quantized value corresponding to a maximum value of the I index numbers and a second quantized value corresponding to a minimum value of the I index number, a first intermediate independent variable corresponding to the first quantized value and a second intermediate independent variable corresponding to the second quantized value through the first calculation rule; and determine, according to the first intermediate independent variable and the second intermediate independent variable and the second calculation rule, the intermediate independent variables corresponding respectively to the quantized values.

In an embodiment, the processing module is further configured to: determine, according to a third quantized value corresponding to any of the I index numbers and the first calculation rule, a third intermediate independent variable corresponding to the third quantized value; and determine the intermediate independent variable corresponding respectively to the quantized values according to the third intermediate independent variable and a predetermined difference between the intermediate independent variables corresponding respectively to the quantized values.

In an embodiment, the processing module is further configured to determine the quantized values corresponding respectively to the index numbers according to the intermediate independent variables of the quantized values corresponding respectively to the index numbers and the first calculation rule, in which an independent variable difference between two intermediate independent variables of two quantized values corresponding respectively to any two adjacent index numbers is the same, or an variable ratio of two intermediate independent variables of two quantized values corresponding respectively to any two adjacent index numbers is the same.

In an embodiment, the I index numbers include I consecutive natural numbers.

Embodiments of the present disclosure provide a communication device, including:

> a processor; and
> a memory for storing processor-executable instructions,
> in which the processor is configured to implement the method for determining the quantized value applied to any embodiment of the present disclosure when running the executable instructions.

In an embodiment, the communication device may include but is not limited to at least one of: a network control repeater and a network device. The network device provided in the present disclosure may include a core network or an access network device and the like. The access network device may include a base station; and the core network may include an AMF and an SMF.

The processor may include various types of storage media that are non-transitory computer storage media that may continue to memorize the information stored thereon after the communication device is powered down.

The processor may be connected to the memory via a bus or the like for reading the executable program stored on the memory.

Embodiments of the present disclosure further provide a computer storage medium having a computer executable program stored therein, when executed by a processor, enable the method for determining the quantized value of any embodiment of the present disclosure to be implemented.

With respect to the apparatuses in the above embodiments, the specific manners for performing operations for individual modules therein have been described in detail in the embodiments regarding the method, which will not be elaborated herein.

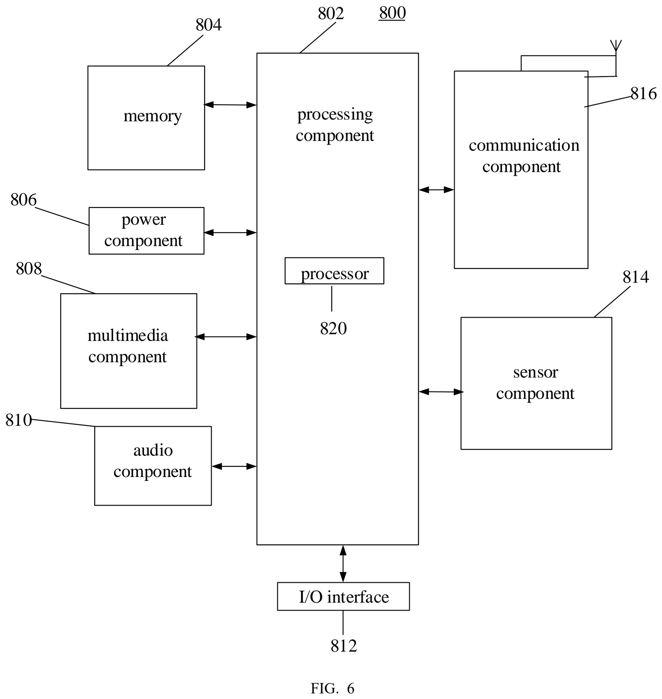

FIG. 6 is a block diagram illustrating a UE 800 according to an illustrative embodiment. For example, the UE 800 may be a mobile phone, a computer, a digital broadcast terminal, a messaging device, a game console, a tablet device, a medical device, a fitness device, a personal digital assistant, or the like.

Referring to FIG. 6, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or some of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button and the like. The button may include, but is not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium (such as the memory 804) including instructions that, when executed by the processor 820 of the UE 800, to perform any of the above-described methods. For example, the non-transitory computer-readable storage medium may be a ROM, a RAM, a CD-ROM, a magnetic tape, a floppy disc, an optical data storage device, and the like.

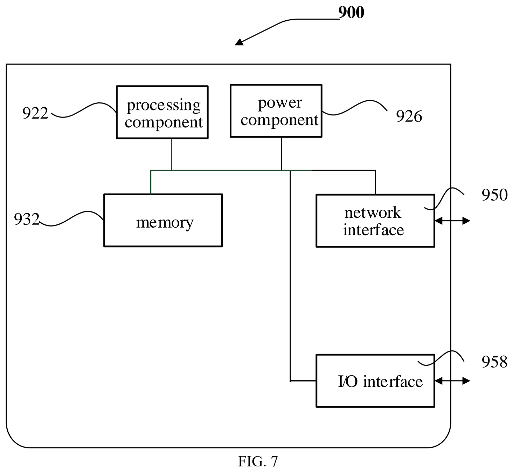

As shown in FIG. 7, an embodiment of the present disclosure illustrates a structure of the access device. For example, the communication device 900 may be provided as a network device. The communication device may be various network elements such as the aforementioned access network element and/or network function.

Referring to FIG. 7, the communication device 900 includes a processing component 922 and a memory resource represented by a memory 932. The processing component 922 may further include one or more processors. The memory resource is configured to store instructions executable by the processing component 922, such as an application program. The application program stored in the memory 932 may include one or more modules each corresponding to a set of instructions. In addition, the processing component 922 is configured to execute the instructions to perform the above method for determining the quantized value.

The communication device 900 further includes a power component 926 configured to perform a power management on the communication device 900, a wired or wireless network interface 950 configured to connect the communication device 900 to the network, and an input/output (I/O) interface 958. The communication device 900 may operate an operating system stored in the memory 932, such as Windows Server TM, Mac OS XTM, Unix TM, Linux TM, Free BSDTM, or the like.

In the absence of contradiction, each step in the above-mentioned embodiments or examples may be implemented as an independent embodiment, and the steps may be arbitrarily combined. For example, a solution after deleting some steps in a certain embodiment or example may also be implemented as an independent embodiment, and the order of the steps in a certain embodiment or example may be arbitrarily exchanged. Furthermore, the optional methods or optional examples in a certain embodiment or example may be arbitrarily combined; in addition, the embodiments or examples may be arbitrarily combined. For example, some or all steps of different embodiments or examples may be arbitrarily combined, and a certain embodiment or example may be arbitrarily combined with the optional methods or optional examples of other embodiments or examples.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for determining a quantized value, comprising:

   determining, according to association information of quantized values corresponding respectively to at least one index number among I index numbers, quantized values corresponding respectively to the I index numbers, wherein the quantized values are associated with a time domain channel property; and
   indicating the quantized values using X bits, wherein I encoded values corresponding to the X bits correspond respectively to the quantized values, where $I=2^X$, and X and I are positive integers.

2. The method according to claim 1, wherein a quantized difference between two quantized values corresponding respectively to any two adjacent index numbers is the same; and
   determining, according to the association information of the quantized values corresponding respectively to the at least one index number among the I index numbers, the quantized values corresponding respectively to the I index numbers comprises:

   determining the quantized difference according to the quantized values corresponding respectively to two index numbers among the I index numbers; and
   determining, at least according to the difference, the quantized values corresponding respectively to the I index numbers.

3. The method according to claim 2, wherein determining the difference according to the quantized values corresponding respectively to two index numbers among the I index numbers comprises:
   determining the quantized difference according to a quantized value corresponding to a maximum value of the I index numbers and a quantized value corresponding to a minimum value of the I index numbers.

4. The method according to claim 1, wherein for each of the quantized values, the association information of the quantized value comprises an intermediate independent variable used to calculate the quantized value, wherein the quantized value is determined based on the intermediate independent variable and a first calculation rule.

5. The method according to claim 4, wherein
determining, according to the association information of the quantized values corresponding respectively to the at least one index number among the I index numbers, the quantized values corresponding respectively to the I index numbers comprises:

determining, according to the quantized values corresponding respectively to the at least one index number and the first calculation rule, the intermediate independent variables corresponding respectively to the at least one quantized value;
determining, according to the intermediate independent variables corresponding respectively to the at least one quantized value and a second calculation rule, the intermediate independent variables corresponding respectively to the quantized values; and
determining, according to the intermediate independent variables corresponding respectively to the quantized values and the first calculation rule, the quantized values.

6. The method according to claim 5, wherein determining, according to the quantized values corresponding respectively to the at least one index number and the first calculation rule, the intermediate independent variables corresponding respectively to the at least one quantized value comprises:

determining, according to a first quantized value corresponding to a maximum value of the I index numbers and a second quantized value corresponding to a minimum value of the I index number, a first intermediate independent variable corresponding to the first quantized value and a second intermediate independent variable corresponding to the second quantized value through the first calculation rule; and
determining, according to the intermediate independent variables corresponding respectively to the at least one quantized value and the second calculation rule, the intermediate independent variables corresponding respectively to the quantized values comprises:
determining, according to the first intermediate independent variable and the second intermediate independent variable and the second calculation rule, the intermediate independent variables corresponding respectively to the quantized values.

7. The method according to claim 5, wherein determining, according to the quantized values corresponding respectively to the at least one index number and the first calculation rule, the intermediate independent variables corresponding respectively to the at least one quantized value comprises:

determining, according to a third quantized value corresponding to any of the I index numbers and the first calculation rule, a third intermediate independent variable corresponding to the third quantized value; and
determining, according to the intermediate independent variables corresponding respectively to the at least one quantized value and the second calculation rule, the intermediate independent variables corresponding respectively to the quantized values comprises:
determining the intermediate independent variable corresponding respectively to the quantized values according to the third intermediate independent variable and a predetermined difference between the intermediate independent variables corresponding respectively to the quantized values.

8. The method according to claim 5, wherein
determining, according to the association information of the quantized values corresponding respectively to the at least one index number among the I index numbers, the quantized values corresponding respectively to the I index numbers comprises:
determining the quantized values corresponding respectively to the index numbers according to the intermediate independent variables of the quantized values corresponding respectively to the index numbers and the first calculation rule, wherein an independent variable difference between two intermediate independent variables of two quantized values corresponding respectively to any two adjacent index numbers is the same, or an variable ratio of two intermediate independent variables of two quantized values corresponding respectively to any two adjacent index numbers is the same.

9. The method according to any one of claims 1 to 8, wherein the I index numbers comprise I consecutive natural numbers.

10. An apparatus for determining a quantized value, comprising:

a processing module configured to determine, according to association information of quantized values corresponding respectively to at least one index number among I index numbers, quantized values corresponding respectively to the I index numbers, wherein the quantized values are associated with a time domain channel property; and indicate the quantized values using X bits, wherein I encoded values corresponding to the X bits correspond respectively to the quantized values, where $I=2^X$, and X and I are positive integers.

11. The apparatus according to claim 10, wherein a quantized difference between two quantized values corresponding respectively to any two adjacent index numbers is the same; and

the processing module is further configured to determine the quantized difference according to the quantized values corresponding respectively to two index numbers among the I index numbers; and determine, at least according to the difference, the quantized values corresponding respectively to the I index numbers.

12. The apparatus according to claim 11, wherein the processing module is further configured to determine the quantized difference according to a quantized value corresponding to a maximum value of the I index numbers and a quantized value corresponding to a minimum value of the I index numbers.

13. The apparatus according to claim 10, wherein for each of the quantized values, the association information of the quantized value comprises an intermediate independent variable used to calculate the quantized value, wherein the quantized value is determined based on the intermediate independent variable and a first calculation rule.

14. The apparatus according to claim 13, wherein the processing module is further configured to determine, according to the quantized values corresponding respectively to the at least one index number and the first calculation rule, the intermediate independent variables corresponding respectively to the at least one quantized value; determine, according to the intermediate independent variables corresponding respectively to the at least one quantized value and a second calculation rule, the intermediate independent variables corresponding respectively to the quantized values; and determine, according to the intermediate independent variables corresponding respectively to the quantized values and the first calculation rule, the quantized values.

15. The apparatus according to claim 14, wherein the processing module is further configured to determine, according to a first quantized value corresponding to a maximum value of the I index numbers and a second quantized value corresponding to a minimum value of the I index number, a first intermediate independent variable corresponding to the first quantized value and a second intermediate independent variable corresponding to the second quantized value through the first calculation rule; and determine, according to the first intermediate independent variable and the second intermediate independent variable and the second calculation rule, the intermediate independent variables corresponding respectively to the quantized values.

16. The apparatus according to claim 14, wherein the processing module is further configured to: determine, according to a third quantized value corresponding to any of the I index numbers and the first calculation rule, a third intermediate independent variable corresponding to the third quantized value; and determine the intermediate independent variable corresponding respectively to the quantized values according to the third intermediate independent variable and a predetermined difference between the intermediate independent variables corresponding respectively to the quantized values.

17. The apparatus according to claim 14, wherein

the processing module is further configured to determine the quantized values corresponding respectively to the index numbers according to the intermediate independent variables of the quantized values corresponding respectively to the index numbers and the first calculation rule, wherein an independent variable difference between two intermediate independent variables of two quantized values corresponding respectively to any two adjacent index numbers is the same, or an variable ratio of two intermediate independent variables of two quantized values corresponding respectively to any two adjacent index numbers is the same.

18. The apparatus according to any one of claims 10 to 17, wherein the I index numbers comprise I consecutive natural numbers.

19. A communication device, comprising:

a processor;

a transceiver;

a memory; and

an executable program stored in the memory and capable of being run by the processor, wherein the processor executes the method for determining the quantized value according to any one of claims 1 to 9 when running the executable program.

20. A computer storage medium having stored therein an executable program that, when executed by a processor, cause the method for determining the quantized value according to any one of claims 1 to 9 to be implemented.

FIG. 1

determining, according to association information of quantized values corresponding respectively to at least one index number among I index numbers, quantized values corresponding respectively to the I index numbers, wherein the quantized values are associated with a time domain channel property

201

indicating the quantized values using X bits, wherein I encoded values corresponding to the X bits correspond respectively to the quantized values, where $I=2^X$, and X and I are positive integers

202

FIG. 2

determining the quantized difference according to the quantized values corresponding respectively to two index numbers among the I index numbers

301

determining, at least according to the difference, the quantized values corresponding respectively to the I index numbers

302

FIG. 3

determining, according to the quantized values corresponding respectively to the at least one index number and the first calculation rule, the intermediate independent variables corresponding respectively to the at least one quantized value — 401

determining, according to the intermediate independent variables corresponding respectively to the at least one quantized value and a second calculation rule, the intermediate independent variables corresponding respectively to the quantized values — 402

determining, according to the intermediate independent variables corresponding respectively to the quantized values and the first calculation rule, the quantized values — 403

FIG. 4

apparatus for determining quantized value 100

processing module 100

FIG. 5

804      802    <u>800</u>

memory

processing
component

communication
component

816

power
component

806

processor

820

multimedia
component

808

sensor
component

814

audio
component

810

I/O interface

812

FIG. 6

**900**

FIG. 7

## INTERNATIONAL SEARCH REPORT

International application No.

**PCT/CN2023/086712**

### A. CLASSIFICATION OF SUBJECT MATTER

H04W24/10(2009.01)i; H04W24/08(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

WPABS, ENTXTC, CNTXT, ENTXT, CNKI: 量化值, 时域, 信道, 特性, 索引号, 关联, 码本, 预编码, 差值, 跟踪参考信号; quantization value, time domain, channel, index number, correlation, codebook, precoding, difference value, TDCP, TRS

### C. DOCUMENTS CONSIDERED TO BE RELEVANT

| Category* | Citation of document, with indication, where appropriate, of the relevant passages | Relevant to claim No. |
|---|---|---|
| X | CN 104539337 A (SOUTHEAST UNIVERSITY) 22 April 2015 (2015-04-22) description, paragraphs 0022-0031 | 1-20 |
| A | CN 101937680 A (TAIYUAN UNIVERSITY OF TECHNOLOGY) 05 January 2011 (2011-01-05) entire document | 1-20 |
| A | CN 103825849 A (SOUTHEAST UNIVERSITY) 28 May 2014 (2014-05-28) entire document | 1-20 |
| A | US 2006210183 A1 (FUJI XEROX CO., LTD.) 21 September 2006 (2006-09-21) entire document | 1-20 |
| A | WO 2019114690 A1 (HUAWEI TECHNOLOGIES CO., LTD.) 20 June 2019 (2019-06-20) entire document | 1-20 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 694 298 A1**

**INTERNATIONAL SEARCH REPORT**

| International application No. |
| --- |
| **PCT/CN2023/086712** |

**C. DOCUMENTS CONSIDERED TO BE RELEVANT**

| Category* | Citation of document, with indication, where appropriate, of the relevant passages | Relevant to claim No. |
| --- | --- | --- |
| A | 肖尚辉 等 (XIAO, Shanghui et al.). "多基站协作系统中有限反馈策略及其码本设计 (Limited Feedback Strategies and Codebook Design in Coordinated Multiple Base-stations Transmission Systems)" 电子与信息学报 (Journal of Electronics & Information Technology), Vol. 32, No. 12, 31 December 2010 (2010-12-31), entire document | 1-20 |

Form PCT/ISA/210 (second sheet) (July 2022)

**INTERNATIONAL SEARCH REPORT**
Information on patent family members

International application No.

**PCT/CN2023/086712**

| Patent document cited in search report | | | Publication date (day/month/year) | Patent family member(s) | | | Publication date (day/month/year) |
|---|---|---|---|---|---|---|---|
| CN | 104539337 | A | 22 April 2015 | None | | | |
| CN | 101937680 | A | 05 January 2011 | None | | | |
| CN | 103825849 | A | 28 May 2014 | None | | | |
| US | 2006210183 | A1 | 21 September 2006 | JP | 2006262310 | A | 28 September 2006 |
| | | | | CN | 1835549 | A | 20 September 2006 |
| WO | 2019114690 | A1 | 20 June 2019 | CN | 109936396 | A | 25 June 2019 |

Form PCT/ISA/210 (patent family annex) (July 2022)